# EUROPÄISCHE PATENTSCHRIFT

(11) **EP 4 311 586 B1**
(45) Veröffentlichungstag und Bekanntmachung des Hinweises auf die Patenterteilung: **09.09.2026**
(21) Anmeldenummer: 23184351.7
(22) Anmeldetag: 10.07.2023
(51) Int. Cl.: B01D 19/00

(54) **ABSCHEIDEEINRICHTUNG, INSBESONDERE LUFT-UND/ODER KÄLTEMITTELABSCHEIDEEINRICHTUNG FÜR EINE WÄRMEPUMPENANLAGE**
SEPARATING DEVICE, IN PARTICULAR AIR AND/OR REFRIGERANT SEPARATING DEVICE FOR A HEAT PUMP SYSTEM
DISPOSITIF DE SÉPARATION, EN PARTICULIER DISPOSITIF DE SÉPARATION D'AIR ET/OU DE RÉFRIGÉRANT POUR UNE INSTALLATION DE POMPE À CHALEUR

(30) Priorität: 25.07.2022 DE 102022118525
(43) Veröffentlichungstag der Anmeldung: 31.01.2024
(73) Patentinhaber: Wolf GmbH, 84048 Mainburg (DE)
(72) Erfinder: ROTT, Konrad, 84432 Hohenpolding (DE); JACOB, Raphael, 85276 Pfaffenhofen/Ilm (DE)
(74) Vertreter: Meissner Bolte Partnerschaft mbB

(56) Entgegenhaltungen:
- CN-U- 207 076 175
- DE-A1- 102018 208 970
- DE-A1- 102019 111 017
- DE-A1- 4 116 672
- DE-A1- 4 434 570
- DE-C- 708 625
- DE-C- 736 057
- KR-A- 20130 005 145

## Beschreibung

Die Erfindung betrifft eine Abscheideeinrichtung, insbesondere Luft- und/oder Kältemittelabscheideeinrichtung für eine Wärmepumpenanlage, eine Wärmepumpenanlage umfassend eine Abscheideeinrichtung, sowie ein entsprechendes Verfahren zum Betreiben einer Abscheideeinrichtung.

Wärmepumpenanlagen zum Heizen und/oder Kühlen, beispielsweise von Gebäudeteilen, sind im Stand der Technik grundsätzlich bekannt. Derartige Wärmepumpenanlagen weisen oftmals einen Primärkreislauf (z. B. Kältekreis), in dem ein Kältemittel strömen kann, und einen Sekundärkreislauf (z. B. Heizwasserkreislauf), in dem ein Heiz- und/oder Kühlfluid strömen kann (und der beispielsweise in Personen-Aufenthaltsbereiche führen kann), auf. Diese Merkmale kann auch die erfindungsgemäße Wärmepumpenanlage aufweisen.

Bei einer Beschädigung einer solchen Wärmepumpenanlage kann es zu Leckagen kommen, so dass ungewollt Kältemittel aus dem Primärkreislauf in den Sekundärkreislauf übertritt. Dort kann das Kältemittel zu Schäden an der Anlage führen und/oder eine Gefahr für Personen darstellen, beispielsweise wenn es sich um ein brennbares Kältemittel handelt und dieses in einem Gebäude aus der Wärmepumpenanlage entweicht (beispielsweise aus einem Automatikentlüfter eines Heizwasserspeichers).

Aus dem Stand der Technik sind Lösungen bekannt, um dieses Problem zu verhindern bzw. zu lösen. Beispielsweise lehrt DE 10 2019 111 017 A1 eine Abscheideeinrichtung (insbesondere Luft-/Kältemittelabscheideeinrichtung) zur Abscheidung von Kältemittel oder anderen Gasen aus dem Heizkreislaufmedium einer Wärmepumpenanlage. Die Abscheideeinrichtung umfasst einen Abscheidebehälter mit zumindest einem Fluideingang und zumindest einem Fluidausgang. Über eine Umlenkeinrichtung wird ein direkter Weg für ein im Abscheidebehälter strömendes Fluid zumindest teilweise, insbesondere vollständig, blockiert. Das abgeschiedene Kältemittel wird einem Entlüfter (z. B. Automatikentlüfter) zugeführt und durch diesen gefahrlos nach außen abgegeben.

Es ist ebenso aus dem Stand der Technik bekannt, dass eine Abscheideeinrichtung einen Schwimmkörper aufweisen kann, der den Strömungsausgang beim Absinken des Heizkreislaufmedium-Spiegels (z. B. durch Gasansammlung in dem Abscheidebehälter bei defektem Automatikentlüfter oder, wenn eine Kältemittel-Leckrate größer als eine Entlüfter-Kapazität ist) verschließt. DE 10 2020 103 743 A1 lehrt eine Abscheideeinrichtung mit einem Zulauf und einem Ablauf für das Heizkreislaufmedium. Diese unterbindet ab einer definierten Gasmenge im Heizkreislaufmedium eine Strömung des Heizkreislaufmediums. Zur Realisierung der Strömungsunterbindung weist die Abscheideeinrichtung einen Schwimmer auf, der im Leckagefall einen Stopfen bildet. Der Schwimmer hat eine geringere Dichte als das Heizkreislaufmedium, sodass er in diesem schwimmt, wenn die Abscheideeinrichtung mit diesem gefüllt ist. Ist das Heizkreislaufmedium im Falle einer Leckage aus der Abscheideeinrichtung herausgepresst worden, so verschließt der Schwimmer den Ablauf. Diese Maßgaben bewirken, dass bei einem Leck am Wärmeübertrager das Wärmepumpenkreislaufmedium jedenfalls nur in begrenztem Umfang in den Heizkreislauf gelangen kann. Ferner ist auch eine Abscheideeinrichtung bekannt aus DE102018208970.

Ausgehend von diesem Stand der Technik ist es eine Aufgabe der vorliegenden Erfindung, eine Abscheideeinrichtung bzw. eine Wärmepumpenanlage mit einer Abscheideeinrichtung der eingangs genannten Art zu verbessern. Bei einem Leck am Wärmeübertrager soll eine weitere Strömung im Heiz- und/oder Kühlkreislauf (insbesondere ein Überströmen von Kältemittel aus einem Primärkreislauf in einen Sekundärkreislauf) möglichst vollständig unterbunden werden. Es soll eine selbsttätige Absperrung bereitgestellt werden, über die auf effektive und möglichst sichere Art und Weise verhindert werden kann, dass größere Mengen von einem Fluid aus einem Primärkreis (z.B. Kältekreis), in dem ein Kältemittel strömen kann, in einen Sekundärkreis (z.B. Heizwasserkreislauf), in dem ein Heiz- und/oder Kühlfluid strömen kann, weiter transportiert werden.

Die Aufgabe wird insbesondere durch eine Abscheideeinrichtung, insbesondere eine Luft-/Kältemittelabscheideeinrichtung, nach Anspruch 1 gelöst.

Die Erfindung umfasst insbesondere eine Abscheideeinrichtung, vorzugsweise Kältemittel- und/oder Luftabscheideeinrichtung, insbesondere für eine Wärmepumpenanlage, vorzugsweise zum Heizen eines Gebäudes oder Gebäudeteiles, zum Separieren eines ersten Fluides, insbesondere eines Gases, aus einer Kombination, insbesondere einem Gemisch, umfassend das erste Fluid und ein zweites Fluid, insbesondere eine Flüssigkeit, vorzugsweise Wasser, und/oder ein Fluid mit höherer Dichte als eine Dichte des ersten Fluides, wobei die Abscheideeinrichtung umfasst:
- zumindest einen Fluidausgang,
- zumindest einen Fluideingang und
- eine Absperreinrichtung, wobei die Absperreinrichtung umfasst:
   - zumindest einen Sinker,
   - zumindest ein elastisches Element, insbesondere Feder, das vorzugsweise derart angeordnet ist, dass es einem Absinken des Sinkers entgegenwirkt und
   - zumindest eine (absperrbare) Öffnung,
wobei der Sinker, insbesondere in Abhängigkeit von einem Pegel des zweiten Fluides in der Abscheideeinrichtung, in einem angehobenen oder einem abgesunkenen Zustand vorliegen kann, wobei die zumindest eine Öffnung durch den zumindest einen Sinker verschlossen ist, wenn sich der zumindest eine Sinker in dem abgesunkenen Zustand befindet.

Ein bedeutender Gedanke der Erfindung liegt darin, eine Abscheideeinrichtung mit einer Absperreinrichtung auszubilden, die wiederum einen Sinker umfasst, der in einem abgesunkenen Zustand eine Öffnung verschließt. Dadurch kann beispielsweise bei einer übermäßigen Präsenz des ersten Fluides ein Weiterströmen des ersten Fluides (bzw. einer Kombination von erstem Fluid und zweitem Fluid) in Bereiche reduziert oder gänzlich verhindert werden, in denen das erste Fluid nicht gewünscht ist (insbesondere zu Risiken führt). Damit können insgesamt auf einfache Art und Weise Schäden und/oder Risiken (insbesondere auch für Personen) reduziert werden. Mit dem elastischen Element wird dabei vorzugsweise eine in Richtung einer Öffnungsstellung des Sinkers wirkende Kraft bereitgestellt, die unabhängig von der Schwer- bzw. Auftriebskraft ist, was die Sicherheit bzw. Betriebssicherheit erhöht, beispielsweise, wenn die Schwer- bzw. Auftriebskraft aufgrund verschiedener zweiter Fluide nicht immer gleich ist.

Die Abscheideeinrichtung kann einen Abscheidebehälter aufweisen. Die Abscheideeinrichtung bzw. der Abscheidebehälter, können eine längliche Form, insbesondere (zumindest abschnittsweise) zylindrische, Form, aufweisen (beispielsweise mindestens 2-mal, ggf. mindestens 4-mal so lang sein wie breit oder mindestens 2-mal, ggf. mindestens 4-mal so hoch sein wie breit und/oder lang). Die Abscheideeinrichtung bzw. der Abscheidebehälter können zumindest im Wesentlichen horizontal (also insbesondere länger als breit) oder zumindest im Wesentlichen vertikal (also insbesondere höher als breit) angeordnet sein.

Unter einem Fluideingang ist ein Bereich zu verstehen, über den das erste und/oder zweite Fluid und/oder die Kombination bzw. das Gemisch aus dem ersten und zweiten Fluid in ein Innenvolumen des Abscheidebehälters eintritt. Hierbei kann es sich beispielsweise um eine Öffnung handeln, ggf. um einen Rohrbereich und/oder Rohrstutzen (der ggf. in das Innenvolumen hineinragen kann oder, alternativ, nicht hineinragen kann). Es kann genau ein Fluideingang (durch den die Kombination bzw. das Gemisch eintritt) oder es können mehrere Fluideingänge vorliegen.

Unter einem Fluidausgang ist ein Bereich zu verstehen, aus dem das erste und/oder zweite Fluid aus dem Abscheidebehälter austritt. Es handelt sich beispielsweise um eine Öffnung, ggf. um einen Rohrabschnitt. Es kann zumindest ein (oder genau ein) erster Fluidausgang für das erste Fluid und zumindest ein (insbesondere genau ein) zweiter Fluidausgang für das zweite Fluid vorliegen. Wenn nur ein Fluidausgang vorliegt, kann dieser zum Entfernen des zweiten Fluides oder sowohl zum Entfernen des ersten als auch des zweiten Fluides (beispielsweise zu verschiedenen Zeitpunkten) verwendet werden. Denkbar wäre es beispielsweise, dass derselbe Fluidausgang in einer ersten Phase zum Ausleiten des zweiten Fluides verwendet wird und in einer zweiten Phase (beispielsweise, wenn sich ein gewisser Anteil des ersten Fluides angesammelt hat und/oder in einer Reinigungs- und/oder Instandhaltungsphase) zusätzlich oder nur das erste Fluid über diesen Fluidausgang ausströmen kann. Ein Fluidausgang für das zweite Fluid kann beispielsweise in eine abführende Leitung münden bzw. mit einer solchen verbunden sein. Ein Fluidausgang für das erste Fluid kann beispielsweise durch eine, ggf. verschließbare, Öffnung definiert sein, durch die das erste Fluid an die Umgebung abgegeben werden kann. Ein Fluidausgang für das zweite Fluid definiert vorzugsweise zugleich die mindestens eine (durch den/die jeweilige/n Sinker absperrbare) Öffnung. Dies ist jedoch nicht zwingend. Beispielsweise kann es sich bei der Öffnung um eine Öffnung handeln, die dem eigentlichen Fluidausgang fluidtechnisch vorgeschaltet ist und beispielsweise innerhalb der Abscheideeinrichtung, insbesondere des Abscheidebehälters, angeordnet ist. Ein Fluidausgang für das erste Fluid wird vorzugsweise durch einen Entlüfter ausgebildet.

Bei dem (jeweiligen) Fluid kann es sich um einen Reinstoff (z. B. Wasser mit ggf. nur unwesentlichen Verunreinigungen) oder um ein Stoffgemisch handeln (beispielsweise Wasser mit einem oder mehreren Alkohol/en). Bei dem ersten Fluid handelt es sich vorzugsweise um ein Gas oder zumindest um ein Fluid mit mindestens 50 Vol.-% oder mindestens 90 Vol.-% (und/oder höchstens 100 Vol.-%) Gasanteil. Bei dem zweiten Fluid handelt es sich vorzugsweise um eine Flüssigkeit oder zumindest um ein Fluid mit mindestens 50 Vol.-% oder mindestens 90 Vol.-% (und/oder höchstens 100 Vol.-%) Flüssigkeitsanteil, vorzugsweise um Wasser (zu mindestens 50 Gew.-% oder mindestens 80 Gew.-%).

Unter einer Kombination von Fluiden soll insbesondere verstanden werden, dass die jeweiligen Fluide in einer gemeinsamen Leitung strömen bzw. in einem gemeinsamen Volumen vorhanden sind. Insofern müssen die Fluide nicht zwingend durchmischt sein. In Ausführungsformen können die in Kombination vorliegenden Fluide jedoch als Gemisch vorliegen (beispielsweise, wenn das erste Fluid in Blasen- oder Bläschenform innerhalb des zweiten Fluides vorliegt). Das Gemisch selbst kann als (ggf. zweiphasiges und/oder mehrere Fluide umfassendes) Fluid bezeichnet werden.

Unter einem Fluid kann ein Gas, eine Flüssigkeit, oder ein Gas-FlüssigkeitsGemisch verstanden werden. Das jeweilige Fluid kann auch feste Bestandteile, z. B. feste Partikel, aufweisen, solange es insgesamt fließfähig ist.

Es kann genau eine absperrbare Öffnung vorliegen oder es können mehrere absperrbare Öffnungen vorliegen. Eine einzelne absperrbare Öffnung wird vorzugsweise durch genau einen Sinker verschlossen. Es wäre jedoch auch denkbar, dass eine absperrbare Öffnung durch zwei oder mehr Sinker verschlossen wird. Ebenso ist es möglich, dass nur ein Sinker mehrere Öffnungen verschließt (beispielsweise, wenn der Sinker mehrere Vorsprünge aufweist, die jeweils in eine entsprechende Öffnung absinken).

Der Sinker ist vorzugsweise so beschaffen, dass er aufgrund seiner Schwerkraft (bis zur Öffnung) sowohl im ersten als auch - vorzugsweise - im zweiten Fluid absinken würde, wenn die Rückstellkraft des elastischen Elements nicht vorliegen würde.

Der Sinker ist vorzugsweise zylinderförmig, weiter vorzugsweise kreiszylinderförmig ausgebildet. Dadurch kann der Sinker besonders zuverlässig stabilisiert bzw. geführt werden. Alternativ kann der Sinker beispielsweise kugelförmig ausgebildet sein.

Eine Höhe des Sinkers kann mindestens 10 mm, vorzugsweise mindestens 30 mm, weiter vorzugsweise mindestens 50 mm, ggf. mindestens 75 mm und/oder höchstens 200 mm, ggf. höchstens 150 mm oder höchstens 100 mm aufweisen. Eine Breite (insbesondere maximale Erstreckung in einer horizontalen Ebene) des Sinkers kann mindestens 10 mm, vorzugsweise mindestens 20 mm, weiter vorzugsweise mindestens 30 mm, ggf. mindestens 50 mm und/oder höchstens 150 mm, ggf. höchstens 100 mm oder höchstens 75 mm aufweisen.

Ein Volumen des Sinkers kann mindestens 0,01 I, vorzugsweise mindestens 0,03 I (Liter), vorzugsweise mindestens 0,1 I, ggf. mindestens 0,15 I und/oder höchstens 5,0 I, vorzugsweise höchstens 1,0 I, ggf. höchstens 0,5 I oder höchstens 0,3 I aufweisen.

Ein Gewicht des Sinkers kann mindestens 0,01 kg, vorzugsweise mindestens 0,03 kg, weiter vorzugsweise mindestens 0,1 kg, ggf. mindestens 0,15 kg und/oder höchstens 5,0 kg, vorzugsweise höchstens 1,0 kg, ggf. höchstens 0,5 kg oder höchstens 0,3 kg aufweisen.

Ein vergleichsweise hohes Volumen des Sinkers, insbesondere bei gleichzeitig möglichst geringer, aber noch über der des zweiten Fluids liegender Dichte, erlaubt im Zusammenspiel mit einer Federhärte des elastischen Elementes einen robusten Betrieb, insbesondere innerhalb vergleichsweise großer Fertigungstoleranzen. Vorzugsweise erfolgt eine Auslegung des Sinker-FederSystems so, dass der Sinker im abgesunkenen Zustand noch zu 20-40 % seiner Länge im zweiten Fluid steht. Insbesondere kann die Abdichtung zwischen Sinker und Dichtung nur flüssigkeitsdicht und nicht gasdicht sein. Geht die Federtoleranz in Richtung härter, so ist die Federkraft im abgesunkenen Zustand des Sinkers höher und der Sinker ist von einer niedrigeren Flüssigkeitssäule umgeben (Kräftegleichgewicht Sinkergewicht-Auftrieb Sinker). Um aufgrund der Feder- und Dichtetoleranz des Sinkers immer eine gewisse Flüssigkeitssäule sicherzustellen, ist ein vergleichsweise großes Volumen des Sinkers vorteilhaft - zur Pufferung der Toleranzen.

Der Sinker umfasst vorzugsweise (insbesondere zu mindestens 50 Gew.-% oder 80 Gew.-%) ein Polymer, beispielsweise Polyolefin, insbesondere Polypropylen. Alternativ oder zusätzlich kann der Sinker (ggf. zu mindestens 50 Gew.-% oder 80 Gew.-%) ein Metall, z. B. Stahl, umfassen.

Der Sinker kann als Vollkörper oder (nach außen fluiddichter) Hohlkörper ausgebildet sein.

Mindestens eine (durch den oder die Sinker absperrbare) Öffnung wird vorzugsweise durch mindestens einen Fluidausgang gebildet. Dies muss jedoch nicht zwingend der Fall sein. Beispielsweise könnte auch eine dem eigentlichen Fluidausgang vorgelagerte (oder nachgelagerte) Öffnung vorliegen, die durch (einen) entsprechende(n) Sinker verschlossen werden kann. Vorzugsweise definiert der zweite Fluidausgang zugleich die zumindest eine absperrbare Öffnung.

Wenn das zweite Fluid eine höhere Dichte als das erste Fluid hat, soll dies insbesondere für eine Temperatur von 20 °C gelten. Die Dichte des zweiten Fluides kann mindestens 1,5-mal oder mindestens 10-mal oder mindestens 100-mal oder mindestens 500-mal so groß sein wie eine Dichte des ersten Fluides. Eine Dichte des zweiten Fluides kann höchstens 1000-mal, ggf. höchstens 800-mal oder höchstens 500-mal oder höchstens 300-mal so groß sein wie die Dichte des ersten Fluides. Bevorzugte Bereiche für das Verhältnis der Dichten können aus den in den beiden vorangehenden Sätzen angegebenen Unter- und Oberwerten gebildet werden. Dabei ist jede Kombination denkbar und somit offenbart, es sei denn sie ist logisch ausgeschlossen. Insofern sollen beispielsweise auch zwei als Untergrenzen angegebene Werte einen beispielhaften Bereich für das Dichtenverhältnis offenbaren.

Unter einer Absperreinrichtung ist insbesondere eine Einrichtung zu verstehen, die ein Ausströmen von Fluid, insbesondere einem zweiten Fluid, aus der Abscheideeinrichtung verhindert oder zumindest einschränkt und/oder die ein Weiterströmen innerhalb der Abscheideeinrichtung verhindert oder zumindest einschränkt. Die Absperreinrichtung kann (und zwar vorzugsweise) innerhalb eines Abscheidebehälters der Abscheideeinrichtung angeordnet sein (also insbesondere innerhalb eines Bereiches, in dem auch die eigentliche Separation stattfindet) oder außerhalb davon (insbesondere fluidtechnisch nachgeschaltet) oder teilweise innerhalb und teilweise außerhalb davon.

Der zumindest eine Sinker kann eine beliebige Form aufweisen, beispielsweise eine Kugelform oder eine (Kreis-)Zylinderform. Es kann genau ein Sinker vorliegen oder es können mehrere Sinker vorliegen. Liegen mehrere Sinker vor, können diese gemeinsam - z. B. über eine gemeinsame Feder - bewegbar sein oder unabhängig voneinander - z. B. über mehrere Federn - bewegbar sein. In Ausführungsformen ist zumindest ein Sinker in einer entsprechenden Führung bzw. Führungseinrichtung geführt, so dass er beispielsweise nur entlang einer geraden (vertikalen oder schiefen) Bahn bewegbar ist (denkbar wäre auch eine gekrümmte Bahn). Möglich ist auch eine schwenkbare Lagerung des Sinkers (alternativ oder zusätzlich).

Der zumindest eine Sinker kann so angeordnet sein, dass er um mindestens 2 mm, ggf. mindestens 5 mm oder mindestens 2 cm und/oder höchstens 40 cm oder höchstens 20 cm bewegbar ist.

Der Sinker kann in seinem (maximal) angehobenen Zustand so angeordnet sein, dass er nicht im direkten Weg einer Fluidströmung liegt. Alternativ oder zusätzlich kann der Sinker oberhalb eines vertikalen Querschnitts durch die Fluidströmung und/oder vertikalen Querschnitts durch ein Innenvolumen der Abscheideeinrichtung bzw. des Abscheidebehälters liegen, wobei sich der besagte Querschnitt vorzugsweise näher als 10 cm, weiter vorzugsweise näher als 3 cm zum Sinker befindet. Dadurch kann eine Einwirkung der Fluidströmung auf den Sinker reduziert werden, was dessen Verhalten stabilisiert und dadurch zu einem vergleichsweise zuverlässigen Betrieb führt.

Das zumindest eine elastische Element kann insbesondere jedes geeignete Element, beispielsweise eine Feder, insbesondere eine Schraubenfeder (und/oder eine Blattfeder und/oder eine Schenkelfeder und/oder Torsionsfeder und/oder Tellerfeder), sein oder umfassen, das vorzugsweise unter Belastung eine definierte Verformung ausführt und nach Entlastung wieder seine Ursprungsgestalt durch elastische Rückstellung annimmt. Das elastische Element kann zumindest anteilig, vorzugsweise in Gewichtsprozent überwiegend aus Metall, vorzugsweise Stahl, bestehen. Alternativ oder zusätzlich kann das elastische Element zumindest anteilig, ggf. in Gewichtsprozent überwiegend oder vollständig aus einem Polymer bestehen. Vorzugsweise kann das zumindest eine elastische Element (insbesondere zumindest im abgesenkten Zustand des Sinkers, ggf. auch im angehobenen Zustand des Sinkers) auf Zug beansprucht werden (insbesondere, wenn es oberhalb des Sinkers angeordnet ist), oder auf Druck beansprucht werden (insbesondere zumindest im abgesenkten Zustand des Sinkers, ggf. auch im angehobenen Zustand des Sinkers) (insbesondere, wenn es unterhalb des Sinkers angeordnet ist). Wenn mehrere elastische Elemente vorgesehen sind können diese allesamt auf Zug oder allesamt auf Druck beansprucht sein. Alternativ kann auch mindestens ein elastisches Element auf Druck und mindestens ein elastisches Element auf Zug beansprucht sein.

Das zumindest eine elastische Element kann beispielsweise mit seinem oberen Ende an dem Abscheidebehälter, insbesondere in einem Deckenwandbereich, vorzugsweise in einem Mittelpunkt davon bzw. um den Mittelpunkt herum, und mit seinem unteren Ende mit dem Sinker, insbesondere an einer oberen Fläche desselben, insbesondere in einem Mittelpunkt davon bzw. um den Mittelpunkt herum, befestigt sein.

Vorteilhafterweise übt das zumindest eine elastische Element (Feder) eine mechanische Krafteinwirkung auf den zumindest einen Sinker aus. Dadurch kann der zumindest eine Sinker zuverlässig in einem angehobenen Zustand gehalten werden, wenn er (nur oder auch) von dem zweiten Fluid umgeben ist. Unter einem zusammenhängenden Fluidstrom ist insbesondere ein Vorliegen des jeweiligen (ggf. strömenden) Fluides zu verstehen, bei dem das Fluid insgesamt eine zusammenhängende Struktur ausbildet (also jedes Fluidteilchen mit jedem weiteren Fluidteilchen unmittelbar oder mittelbar, jedoch ausschließlich über dazwischenliegende Fluidteilchen, verbunden ist). Wenn beispielsweise auf einen bestimmten Abschnitt (insbesondere beim Einströmen) abgestellt wird, ist darunter zu verstehen, dass zumindest im jeweiligen Querschnitt eine zusammenhängende Struktur vorliegen soll. Vorzugsweise liegt das zweite Fluid nicht in Tröpfchenform vor. In Ausführungsformen wird das erste Fluid durch das zweite Fluid transportiert bzw. mitgerissen (beispielsweise, wenn das erste Fluid in Blasenform vorliegt).

Bei dem ersten Fluid und/oder bei dem zweiten Fluid handelt es sich vorzugsweise nicht um ein Öl (und/oder eine sonstige Flüssigkeit, die sich nicht mit Wasser mischen lässt). Wenn das erste bzw. zweite Fluid einen bestimmten Stoff (z. B. Wasser) umfasst, soll dies insbesondere bedeuten, dass der jeweilige Stoff (Reinstoff) zu mindestens 10 Gew.-%, ggf. mindestens 30 Gew.-% oder mindestens 50 Gew.-% oder mindestens 90 Gew.-% oder mindestens 99 Gew.-% innerhalb des Fluides vorliegt. Wenn mehrere Stoffe in demselben Fluid vorliegen, sollen die im vorangehenden Satz angegebenen Werte (als Unterwerte) insbesondere durch die Anzahl der vorliegenden Stoffe geteilt werden.

Das erste Fluid kann (ggf. ausschließlich) Luft und/oder (ggf. ausschließlich) Edelgas und/oder (ggf. ausschließlich) ein Kältemittel umfassen. Bei dem Kältemittel kann es sich um ein brennbares oder nicht-brennbares Kältemittel handeln. Eine Verdampfungstemperatur des Kältemittels kann (bei 1 bar) unter der Verdampfungstemperatur von Wasser, insbesondere unter 100 °C, vorzugsweise unter 80 °C liegen. Das Kältemittel kann beispielsweise (insbesondere teil-halogenierte) Fluorkohlenwasserstoffe aufweisen. Beispielsweise kann das Kältemittel (nicht-halogenierte oder chlorierte oder fluorierte) Kohlenwasserstoffe, wie beispielsweise Propan, Propen, Propylen und/oder Butan aufweisen. Das Edelgas kann Helium, Neon, Argon, Krypton, Xenon und/oder Radon umfassen.

Das zweite Fluid (umfassend oder bestehend aus eine/r Flüssigkeit, vorzugsweise Wasser), insbesondere Heiz- und/oder Kühlfluid, hat insbesondere eine definierte, größere Dichte als das erste Fluid, (umfassend oder bestehend aus ein/einem Gas, vorzugsweise Luft und/oder Kältemittel).

Das zweite Fluid kann Wasser und/oder Sole und/oder Alkohol (insbesondere Glykol) und/oder ein Thermofluid umfassen. Anstelle oder zusätzlich zu Glykol kann/können noch ein oder mehrere weitere Alkohole vorliegen, wie beispielsweise Ethanol, Propanol und/oder Methanol. In besonders bevorzugten Ausführungsformen umfasst das zweite Fluid Wasser und das erste Fluid Luft und/oder Kältemittel.

Der zumindest eine Sinker kann vorzugsweise ein Masse-pro-Verdrängungsvolumen-Verhältnis aufweisen, das größer ist als eine Dichte des ersten Fluides (ggf. mindestens 10-mal so groß oder mindestens 200-mal so groß oder mindestens 1000-mal so groß und/oder höchstens 10000-mal so groß oder höchstens 8000-mal so groß oder höchstens 6000-mal so groß) und/oder ein Masse-pro-Verdrängungsvolumen-Verhältnis aufweisen, das größer ist als eine Dichte des zweiten Fluides (beispielsweise mindestens 1,05-mal so groß oder mindestens 1,1-mal so groß oder mindestens 1,2-mal so groß und/oder höchstens 20-mal so groß oder höchstens 5-mal so groß oder höchstens 1,5-mal oder höchstens 1,25-mal so groß. Insbesondere kann die Federkraft den Dichteunterschied zwischen dem Sinker und dem zweiten Fluid, z. B. Wasser, ausgleichen. Vorteil von vergleichsweise geringen Masse-pro-Verdrängungsvolumen-Unterschied zwischen Sinker und zweitem Fluid: Bei großen Dichteunterschieden wären ggf. größere Federkräfte erforderlich, die wiederum größere Federkrafttoleranzen zur Folge haben können. Diese könnten dazu führen, dass der Sinker bei abgesunkenem zweiten Fluidpegel nicht vollständig absinken kann und die Öffnung nicht verschließt.). Ferner kann der zumindest eine Sinker ein größeres Masse-pro-Verdrängungsvolumen-Verhältnis aufweisen als die Kombination, insbesondere das Gemisch, umfassend das erste Fluid und das zweite Fluid.

Insoweit hier, weiter oben und nachfolgend Dichtewerte angegeben werden, soll insbesondere eine Dichte bei 20 °C herangezogen werden.

Das Masse-pro-Verdrängungsvolumen-Verhältnis des Sinkers weist einen Wert von mindestens 1000 kg/m³, vorzugsweise mindestens 1050 kg/m³, ggf. mindestens 1120 kg/m³ und/oder einen Wert von höchstens 10000 kg/m³, ggf. höchstens 5000 kg/m³ oder höchstens 1500 kg/m³ auf. Beispielhafte Bereiche lassen sich aus den hier angegebenen Unter- und Obergrenzen bilden, die beliebig miteinander kombiniert werden können, solange dies logisch möglich ist. Insbesondere kann ein beispielhafter Bereich auch durch zwei Untergrenzen oder durch zwei Obergrenzen definiert sein.

Unter einem Masse-pro-Verdrängungsvolumen-Verhältnis ist bei einem nach außen dichten (beispielsweise nicht oder nur geschlossen-porösen) Körper das spezifische Gewicht zu verstehen. Im Allgemeinen ist jedoch dasjenige Volumen zu verstehen, das der Sinker innerhalb eines Fluides, insbesondere des zweiten Fluides verdrängt. Zur Vereinfachung kann ggf. reines Wasser als Referenz-Fluid herangezogen werden. Wenn der Sinker also beispielweise offenporös ausgestaltet ist, würden die sich mit Fluid füllenden offenen Poren nicht dem Volumen bzw. Verdrängungsvolumen zugerechnet werden.

In einer vorteilhaften Ausführungsform kann zumindest ein erster Fluidausgang für das erste Fluid in einer oberen Hälfte der Abscheideeinrichtung, insbesondere oberhalb von zumindest einem zweiten Fluidausgang für das zweite Fluid und/oder oberhalb von dem zumindest einen Fluideingang, insbesondere in einem Deckenwandbereich, angeordnet sein und/oder der zumindest ein zweiter Fluidausgang in einer unteren Hälfte der Abscheideeinrichtung, insbesondere in einer unteren Hälfte eines Abscheidebehälters, vorzugsweise in einem Bodenwandbereich, angeordnet sein. Alternativ oder zusätzlich kann der zumindest eine Fluideingang seitlich und/oder oberhalb des zumindest einen zweiten Fluidausgangs angeordnet sein und/oder tangential in die Abscheideeinrichtung hineinführen.

Unter einer Anordnung in einem Deckenwandbereich kann eine Anordnung verstanden werden, in dem die jeweilige Struktur zumindest einen höchsten Punkt in der Abscheideeinrichtung, insbesondere in dem Abscheidebehälter, umfasst. Analog kann unter einer Anordnung in einem Bodenwandbereich verstanden werden, dass die jeweilige Struktur zumindest einen tiefsten Punkt in der Abscheideeinrichtung, insbesondere in dem Abscheidebehälter umfasst.

Der zumindest eine Fluideingang kann an einer, insbesondere zylindermantelförmigen, Seitenwand und/oder einem oberen Drittel der Abscheideeinrichtung, insbesondere des Abscheidebehälters, angeordnet sein. Die Angabe "oberes Drittel" bezieht sich hier insbesondere auf ein Innenvolumen des Abscheidebehälters, insbesondere des Abscheidebehälters, von einem niedrigsten Punkt bis zu einem höchsten Punkt, insbesondere von einem Bodenwandbereich zu einem Deckenwandbereich. Dadurch können die Abscheideeinrichtung effektiv betrieben und Risiken aus einer (Grob-)Leckage reduziert werden.

In einer vorteilhaften Ausführungsform kann eine Druckentlastungseinrichtung, insbesondere ein Sicherheitsventil, an der Abscheideeinrichtung vorgesehen sein.

Konkret kann die Druckentlastungseinrichtung ein gegenüber der Abscheideeinrichtung separates Bauteil bilden, das an eine entsprechende Öffnung der Abscheideeinrichtung, vorzugsweise eine entsprechende Öffnung des Abscheidebehälters, angeschlossen ist. Durch eine derartige Druckentlastungseinrichtung kann das erste Fluid, insbesondere in flüssiger Form oder Gas-Form, besonders effektiv abgeleitet werden (insbesondere im Falle einer Grobleckage). Die Druckentlastungseinrichtung kann in einer oberen Hälfte des Abscheidebehälters, insbesondere oberhalb des zumindest einen Fluideingangs, und/oder unterhalb des zumindest einen ersten Fluidausgangs und/oder oberhalb des zumindest einen zweiten Fluidausgangs angeordnet sein. Insbesondere kann die Druckentlastungseinrichtung seitlich, insbesondere an einer zylindermantelförmigen, Seitenwand des Abscheidebehälters angeordnet sein.

In einer vorteilhaften Ausführungsform kann der zumindest eine erste Fluidausgang durch einen Entlüfter, insbesondere Automatikentlüfter, ausgebildet sein. Der Entlüfter kann ggf. als separates Bauteil vorliegen, das an die Abscheideeinrichtung, vorzugsweise an den Abscheidebehälter, angebracht ist (oder integraler Bestandteil der Abscheideeinrichtung sein). Der Entlüfter kann ein verschließbares Ventil aufweisen. Nimmt der Anteil an dem ersten Fluid im Abscheidebehälter zu, kann dieses ggf. insbesondere aufgrund einer geringeren Dichte als das zweite Fluid aufsteigen und sich an einem vergleichsweise hohen Punkt ansammeln, wo es dann ggf. über den zumindest einen ersten Fluidausgang, insbesondere Entlüfter, ausgestoßen werden kann.

In einer vorteilhaften Ausführungsform kann dem zumindest einen zweiten Fluidausgang bzw. der zumindest einen absperrbaren Öffnung eine Dichtung, insbesondere ein Dichtring, zugeordnet sein.

Der zumindest eine Sinker kann auf der Dichtung aufsitzen und den zumindest einen zweiten Fluidausgang bzw. die Öffnung dicht verschließen. Mittels der Dichtung können Fertigungsungenauigkeiten des zumindest einen Sinkers und/oder der Öffnung in der Abscheideeinrichtung bzw. in dem Abscheidebehälter berücksichtigt und ausgeglichen werden. Es kann außerdem vermieden werden, dass bei einem geringfügig schiefen Aufsitzen des zumindest einen Sinkers auf der zu verschließenden Öffnung ein Spalt entsteht. So kann sichergestellt werden, dass die zumindest eine Öffnung vollständig verschlossen wird.

In einer vorteilhaften Ausführungsform kann der zumindest eine Sinker und/oder eine/die(obige) Dichtung zumindest einen Vorsprung aufweisen, der mit dem zumindest einen zweiten Fluidausgang bzw. mit der zumindest einen absperrbaren Öffnung und/oder der Dichtung, kontaktierbar ist.

Der zumindest eine Vorsprung kann an einer unteren Fläche des zumindest einen Sinkers ausgebildet sein. Eine untere Fläche des Sinkers ist als eine Fläche zu verstehen, die dem zumindest einen zweiten Fluidausgang bzw. der zumindest einen Öffnung bzw. der Dichtung zugewandt, ggf. parallel dazu, ist. Der zumindest eine Vorsprung kann umlaufend geschlossen ausgebildet sein. Alternativ oder zusätzlich kann der zumindest eine Sinker einen oder mehrere Vorsprüng/e aufweisen. Dies hat den Vorteil, dass eine Flächenpressung zwischen dem zumindest einen Sinker und dem zweiten Fluidausgang bzw. der Öffnung, insbesondere der Dichtung, erhöht werden kann und ein zuverlässiges Verschließen gewährleistet werden kann.

Der zumindest eine Sinker kann optional bis zu einem obersten Punkt der Abscheideeinrichtung (Deckenwandbereich), insbesondere des Abscheidebehälters, bewegbar sein. Alternativ ist es auch möglich, dass der Sinker schon vor Erreichen des obersten Punktes gehalten wird. In einer vorteilhaften Ausführungsform kann die Abscheideeinrichtung, insbesondere der Abscheidebehälter, zumindest einen Anschlag aufweisen, der den zumindest einen Sinker in einer (z. B. vertikalen oder schräg nach oben gerichteten) Bewegung nach oben begrenzt, beispielsweise so dass ein oberster Punkt des Sinkers einen Abstand von mindestens 2 cm oder mindestens 4 cm und/oder höchstens 30 cm zu einem höchsten Punkt eines Innenvolumens des Abscheidebehälters aufweist.

Indem die (z. B. vertikale) Bewegung des zumindest einen Sinkers nach oben beschränkt wird, kann vermieden werden, dass eine Aufwärtsbewegung des zumindest einen Sinkers zu einer Beschädigung des Abscheidebehälters, insbesondere der Oberseite bzw. des Deckenwandbereichs, führt, und/oder zu einer Beschädigung des elastischen Elements (der Feder) führt, und/oder und/oder zu einer Beschädigung des Entlüfters führt. Alternativ oder zusätzlich kann auch verhindert werden, dass beispielsweise der Entlüfter bzw. ein Entlüfterzugang durch den Sinker abgedeckt bzw. verschlossen wird (das würde ansonsten eine Abscheidung von Luft/Kältemittel über den Entlüfter im angehobenen Zustand des Sinkers zumindest erschweren oder verhindern). Es können mehrere Anschläge vorgesehen sein. Der zumindest eine Anschlag kann umlaufend geschlossen ausgebildet sein. Der zumindest eine Anschlag kann beispielsweise in einem oberen Bereich des Abscheidebehälters an einer Innenwandung des Abscheidebehälters oder an einem Deckenwandbereich angeordnet sein. Zusätzlich oder alternativ kann der zumindest eine Anschlag an zumindest einem vertikalen Führungselement angeordnet sein. Bewegt sich der zumindest eine Sinker nach oben (hin zu einem angehobenen Zustand), kann der zumindest eine Anschlag zumindest einen Bereich einer oberen Fläche des Sinkers kontaktieren und so dessen Aufwärtsbewegung begrenzen. Eine obere Fläche des Sinkers ist als eine Fläche zu verstehen, die dem zumindest einen ersten Fluidausgang und/oder dem Deckenwandbereich des Abscheidebehälters zugewandt, ggf. parallel dazu, ist. Der zumindest eine Anschlag kann derart angeordnet sein, dass er die Wirkung bzw. Bewegung des elastisch bewegbaren Elements nicht beeinträchtigt.

In einer vorteilhaften Ausführungsform kann die Abscheideeinrichtung, insbesondere der Abscheidebehälter, zumindest ein Führungselement zum, vorzugsweise zumindest im Wesentlichen vertikalen, Führen des zumindest einen Sinkers aufweisen. Insofern hier, weiter oben und/oder nachfolgend von einer vertikalen Führung die Rede ist, kann es sich um eine exakt vertikale Richtung handeln oder um eine Richtung, die höchstens 45 ° oder höchstens 20 ° oder höchsten 5 ° von der Vertikalen abweicht.

Bei der Bewegungsbahn des Sinkers kann es sich um eine vertikale, ggf. geradlinige oder nicht-geradlinige, beispielsweise kurvenförmige, und/oder schräge Bewegungsbahn des Sinkers zwischen einem angehobenen und einem abgesunkenen Zustand bzw. umgekehrt handeln.

Das Führungselement kann mit einem Deckenwandbereich und/oder einem Bodenwandbereich der Abscheideeinrichtung bzw. des Abscheidebehälters verbunden sein. Das Führungselement kann den zumindest einen Sinker nahezu vollständig, insbesondere vollständig, umschließen. Beispielsweise kann das Führungselement als Käfig ausgebildet sein oder ein solches umfassen und/oder mindestens eine Schiene (ggf. definiert durch eine Nut oder einen länglichen Vorsprung) umfassen.

Dadurch kann auf konstruktiv besonders einfache Art und Weise sichergestellt werden, dass der zumindest eine Sinker eine definierte Bewegung ausführen und sowohl einen angehobenen und einen abgesunkenen Zustand zuverlässig erreichen kann. Es kann auf einfache Weise sichergestellt werden, dass weder die Abscheideeinrichtung noch Elemente davon aufgrund einer unerwünschten Bewegung des zumindest einen Sinkers beschädigt werden. Zudem kann gewährleistet werden, dass der zumindest eine Sinker dichtend auf dem zumindest einen zweiten Fluidausgang bzw. auf der zumindest einen Öffnung aufsitzen kann, um diese(n) effektiv und vollständig zu verschließen.

In einer vorteilhaften Ausführungsform kann der Abscheidebehälter zumindest ein Zentrierelement, vorzugsweise zum Begrenzen der rotatorischen Bewegung des zumindest einen Sinkers und/oder zum Begrenzen des Verdrehens des zumindest einen elastischen Elements aufweisen.

Das zumindest eine Zentrierelement kann beispielsweise durch zumindest einen Zentriervorsprung, vorzugsweise Zentrierstift, und/oder zumindest eine entsprechende Zentrierausnehmung (insbesondere Zentriernut) gebildet werden. Beispielsweise kann der zumindest eine Zentrierstift an einer Innenwandung der Abscheideeinrichtung, insbesondere an einer Innenwandung des Abscheidebehälters, vorzugsweise einer Innenwandung des Führungselementes, angeordnet sein und eine auf den Zentrierstift abgestimmte Zentriernut kann an dem zumindest einen Sinker angeordnet sein, in der sich der zumindest eine Zentrierstift bewegen kann. Alternativ oder zusätzlich kann auch eine Zentriernut an der Abscheideeinrichtung, insbesondere dem Abscheidebehälter, vorzugsweise dem Führungselement und ein Zentrierstift am Sinker angeordnet sein.

Somit kann erreicht werden, dass der zumindest eine Sinker in einer Drehbewegung, insbesondere einer Rotation um seine Bewegungsbahn, eingeschränkt wird, insbesondere wenn ein erstes und/oder zweites Fluid in den Abscheidebehälter strömt und durch die Strömung der Sinker zu einer Bewegung angeregt wird. Durch das Zentrierelement kann auch ein Verdrehen des zumindest einen elastischen Elements vermieden oder zumindest eingeschränkt werden. Dadurch kann insgesamt auf konstruktiv besonders einfache Art und Weise eine Sicherung des zumindest einen Sinkers bzw. des zumindest einen elastischen Elements gegen Verdrehen realisiert werden und so vermieden werden, dass dadurch die Abscheideeinrichtung oder Elemente davon beschädigt werden.

Die eingangs genannte Aufgabe wird weiterhin insbesondere durch ein System, vorzugsweise Wärmepumpenanlage, insbesondere zum Heizen und/oder Kühlen eines Raumes, vorzugsweise eines Personen-Aufenthaltsbereiches, gelöst, umfassend die obige Abscheideeinrichtung (insbesondere in einem Sekundär-, vorzugsweise Heizkreis der Wärmepumpenanlage), insbesondere Luft- und/oder Kältemittelabscheideeinrichtung, sowie optional ein mit der Abscheideeinrichtung fluidtechnisch verbundenes Ventil, vorzugsweise Rückschlagarmatur, weiter vorzugsweise eine Rückschlagklappe und/oder ein Rückschlagventil, das stromaufwärts von der Abscheideeinrichtung und/oder der zumindest einen absperrbaren Öffnung angeordnet oder anordenbar ist, insbesondere derart, dass bei verschlossener Öffnung (durch den Sinker) eine Sperrung durch das Ventil erfolgt (und somit ein Volumen zwischen verschlossener Öffnung und Ventil abgeschlossen wird), gelöst. Vorzugsweise ist also das Ventil so konfiguriert bzw. gesteuert, dass es sperrt, wenn auch die Absperreinrichtung sperrt. In einer einfachen Ausführungsform ist dazu ein entsprechendes Rückschlagventil und/oder eine Rückschlagklappe vorgesehen (das/die eine Fluidströmung entgegen der eigentlichen im Normalbetrieb vorliegenden Fluidströmung verhindert bzw. sperrt). Denkbar wäre es jedoch auch, das Ventil so anzusteuern (beispielsweise mittels einer entsprechenden Sensorik), dass es dann sperrt, wenn die Absperreinrichtung bzw. der Sinker sperrt.

Das System, vorzugsweise die Wärmepumpenanlage, kann dadurch gekennzeichnet sein, dass der zumindest eine Sinker ein Masse-pro-Verdrängungsvolumen-Verhältnis aufweisen kann, das größer ist als eine Dichte des ersten Fluides und/oder größer ist als eine Dichte des zweiten Fluides. Das Masse-pro-Verdrängungsvolumen des Sinkers weist einen Wert von mindestens 1000 kg/m³, vorzugsweise mindestens 1050 kg/m³, ggf. mindestens 1120 kg/m³ und/oder einen Wert von höchstens 10000 kg/m³, vorzugsweise höchstens 5000 kg/m³, ggf. höchstens 1500 kg/m³ auf.

Das System, insbesondere die Wärmepumpenanlage kann vorzugsweise einen Primärkreislauf (z.B. Kältekreis) und einen Sekundärkreislauf (z.B. Heizkreis, insbesondere Wasserheizkreis, der beispielsweise in Personen-Aufenthaltsbereiche führen kann) umfassen. Ein erstes Fluid, insbesondere ein bzw. das obige Kältemittel, kann vorzugsweise im Primärkreis strömen. Ein zweites Fluid, insbesondere ein Heiz- bzw. Kühlfluid kann vorzugsweise im Sekundärkreislauf (z.B. Heizkreis) strömen. Die Wärmepumpenanlage kann einen Wärmetauscher, insbesondere Plattenwärmetauscher (zwischen Primär- und Sekundärkreis) aufweisen.

Vorzugsweise kann die Abscheideeinrichtung (fluidtechnisch) hinter dem Wärmetauscher, insbesondere Plattenwärmetauscher, der Wärmepumpenanlage angeordnet (vorzugsweise unmittelbar dahinter angeordnet) sein. Die Abscheideeinrichtung kann am Vorlauf (Austritt) des Wärmetauschers (insbesondere an einer höchsten Stelle des Sekundärkreises) angeordnet sein.

Das System, vorzugsweise die Wärmepumpenanlage, kann ferner eine (insbesondere die obige) Abscheideeinrichtung sowie ein Bauteil umfassen, durch das das zweite Fluid strömbar ist und bei dem zumindest in einem Leckage-Fall das erste Fluid auch in Bereiche einströmt, die von dem zweiten Fluid durchströmt werden, wobei das Bauteil vorzugsweise Bestandteil eines Wärmetauschers, beispielsweise Verflüssigers oder Verdampfers, ist und/oder wobei das genannte Ventil, vorzugsweise die Rückschlagarmatur, weiter vorzugsweise die Rückschlagklappe und/oder das Rückschlagventil, stromaufwärts des Bauteils angeordnet ist.

Es ergeben sich ähnliche oder identische Vorteile, wie sie bereits im Zusammenhang mit der vorstehend beschriebenen selbsttätigen Absperrung beschrieben worden sind.

Die eingangs genannte Aufgabe wird weiterhin insbesondere durch ein Verfahren zum Betreiben der obigen Abscheideeinrichtung, insbesondere Luft- und/oder Kältemittelabscheideeinrichtung, und/oder des obigen Systems, insbesondere im Fall einer Leckage eines/des Bauteils, vorzugsweise Wärmetauschers, insbesondere Verdampfer und/oder Verflüssigers, gelöst.

Im Falle einer (Grob-)Leckage eines (insbesondere des obigen) ersten Fluides, insbesondere Kältemittels, wird zumindest ein zweiter Fluidausgang durch zumindest einen Sinker verschlossen, wobei das erste Fluid vorzugsweise über eine (die obige) Druckentlastungseinrichtung abgeschieden wird.

Vorzugsweise kann das erste Fluid ein Gas, vorzugsweise Luft und/oder mindestens ein Edelgas, und/oder ein Kältemittel und/oder ein Fluid mit einer geringeren Dichte als ein Masse-zu-Verdrängungsvolumen-Verhältnis des Sinkers umfassen.

Das zweite Fluid kann in Ausführungsformen eine Flüssigkeit, vorzugsweise Wasser und/oder Sole und/oder Glykol und/oder Thermofluid, und/oder ein Fluid mit höherer Dichte als eine Dichte des ersten Fluides und/oder ein Fluid mit einer geringeren Dichte als ein Masse-zu-Verdrängungsvolumen-Verhältnis des Sinkers umfassen. Hier und weiter oben (im analogen Zusammenhang) offenbarte Kombinationen wie beispielsweise, dass das zweite Fluid Wasser und ein Fluid mit vergleichsweise hoher Dichte sein kann, können auch so verstanden werden, dass ein und dasselbe Fluid (also beispielsweise Wasser) beide Eigenschaften erfüllt, also in diesem Beispiel gilt, dass das Wasser gleichzeitig auch eine höhere Dichte als das erste Fluid aufweist. Genauso kann es sich jedoch auch um zwei verschiedene Fluide handeln, also einerseits um Wasser und andererseits um ein weiteres Fluid, das in diesem Beispiel eine vergleichsweise hohe Dichte aufweist.

Die Kombination, insbesondere das Gemisch (bzw. das zweite Fluid zumindest in einem Normalbetrieb) kann zumindest teilweise, insbesondere überwiegend (also vorzugsweise zu mindestens 50 Gew.-% oder Vol.-%; oder mindestens 80 Gew.-% oder Vol.-%), als zusammenhängender Flüssigkeitsstrom in die Abscheideeinrichtung einströmen. Alternativ oder zusätzlich kann die Kombination, insbesondere das Gemisch bzw. das zweite Fluid (jedenfalls in einem Normalbetrieb) zumindest teilweise, insbesondere überwiegend (also vorzugsweise zu mindestens 50 Gew.-% oder Vol.-%; oder mindestens 80 Gew.-% oder Vol.-%) innerhalb der Abscheideeinrichtung (bzw. des Abscheidebehälters) von dem mindestens einen Fluideingang für die Kombination, insbesondere das Gemisch (bzw. das zweite Fluid zumindest in einem Normalbetrieb) bis zu mindestens einem Ausgang für das zweite Fluid, einen zusammenhängenden Flüssigkeitsstrom ausbilden. In dem Verfahren ist es also vorzugsweise so, dass das zweite Fluid als zusammenhängender Strom durch die Abscheideeinrichtung strömt (und beispielsweise nicht als Sprühnebel oder durch eine gasgetragene Tropfenwolke) transportiert wird.

In einer Ausführungsform kann es sich bei dem zweiten Fluid vorzugsweise um ein (weiter vorzugsweise re-) zirkulierendes, Arbeitsmedium handeln, aus dem das erste Fluid entfernt wird. Besonders bevorzugt handelt es sich um ein Medium zum Transportieren von Wärme (bzw. Kälte), beispielsweise in einen Innenraum zum Aufheizen (bzw. Abkühlen) desselben.

In Ausführungsformen zirkuliert das Arbeitsmedium beispielsweise als Wasser in einem Sekundärkreislauf (z. B. Heizwasser-Kreislauf oder Kühlwasser-Kreislauf).

Es ergeben sich ähnliche oder identische Vorteile, wie sie bereits im Zusammenhang mit der vorstehend beschriebenen Abscheideeinrichtung beschrieben worden sind.

Nachfolgend wird die Erfindung anhand von Ausführungsbeispielen beschrieben, die anhand der Abbildungen näher erläutert werden. Hierbei zeigen:
- Fig. 1: eine schematische Darstellung einer erfindungsgemäßen Abscheideeinrichtung in einem ersten Betriebszustand, in dem ein Sinker in einem angehobenen Zustand ist;
- Fig. 2: eine schematische Darstellung einer erfindungsgemäßen Abscheideeinrichtung in einem zweiten Betriebszustand, in dem ein Sinker in einem abgesunkenen Zustand ist;
- Fig. 3: eine schematische Darstellung einer erfindungsgemäßen Wärmepumpenanlage; und
- Fig. 4: eine schematische Schnittdarstellung durch eine erfindungsgemäße Abscheideeinrichtung.

In der nachfolgenden Beschreibung werden für gleiche und gleichwirkende Teile dieselben Bezugsziffern verwendet.

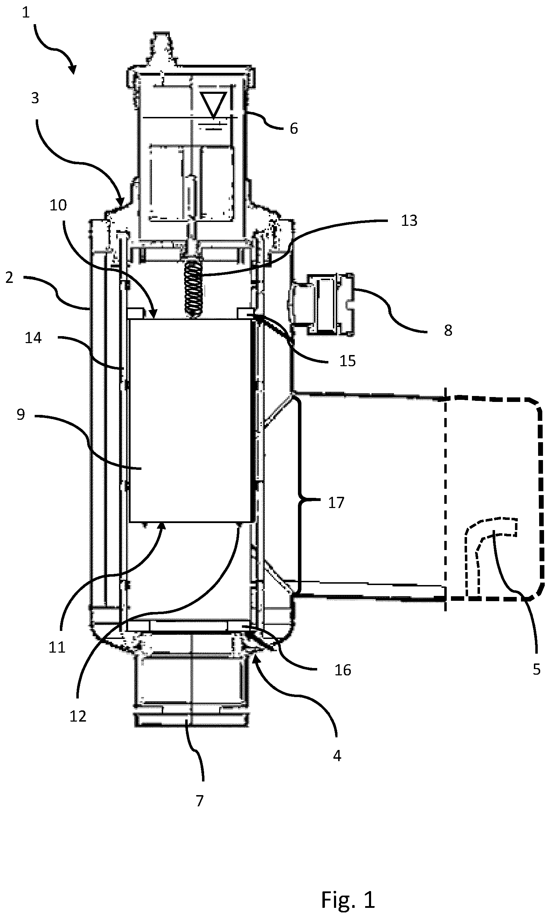

Fig. 1 zeigt eine schematische Darstellung einer erfindungsgemäßen (Luft- und/oder Kältemittel-) Abscheideeinrichtung 1 in einem ersten Betriebszustand.

Die Abscheideeinrichtung 1 weist einen abschnittsweise zylinderförmigen Abscheidebehälter 2 mit einem oberen Deckenwandbereich 3 und einem unteren Bodenwandbereich 4 auf. Seitlich am Abscheidebehälter 2 ist ein Fluideingang 5 für den Eintritt von einem ersten Fluid (z. B. Luft und/oder Kältemittel) und/oder einem zweiten Fluid (z. B. Wasser) angeordnet. Das erste Fluid weist dabei eine geringere Dichte auf als das zweite Fluid. Ein erster Fluidausgang 6 zum Abführen des ersten Fluides, d.h. insbesondere für ausströmende Luft (insbesondere bei einer Feinleckage kann auch z. B. bei angehobenem Sinker beispielsweise gasförmiges Kältemittel zum Entlüfter gelangen) ist als ein Entlüfter ausgebildet und im Deckenwandbereich 3 angeordnet. Ein zweiter Fluidausgang 7 für den Austritt des zweiten Fluides ist im Bodenwandbereich 4 angeordnet. In dem Abscheidebehälter 2 ist ein zylinderförmiger Sinker 9 bewegbar angeordnet. Der Sinker 9 ist so ausgerichtet, dass seine obere Fläche 10 parallel zum Entlüfter 6 und seine untere Fläche 11 parallel zum zweiten Fluidausgang 7 ist. Der zweite Fluidausgang 7 bildet zugleich eine absperrbare Öffnung, die durch den Sinker 9 verschlossen werden kann (was in der Darstellung bzw. dem Zustand gemäß Fig. 1 nicht der Fall ist). In einem äußeren Bereich an seiner unteren Fläche 11 weist der Sinker 9 einen (ggf. umlaufend geschlossenen) Vorsprung 12 auf.

In dem Zustand gemäß Fig. 1 ist der Innenraum des Abscheidebehälters 2 mit dem (nicht dargestellten) zweiten Fluid gefüllt. Das Masse-pro-Verdrängungsvolumen-Verhältnis des Sinkers 9 ist größer als eine Dichte des ersten und des zweiten Fluides. Das vom Sinker 9 verdrängte Volumen des zweiten Fluides erzeugt zwar eine Auftriebskraft. Jedoch ist diese zu gering, um den Sinker 9 nach oben zu drücken. Der Sinker 9 würde daher ohne eine weitere Krafteinwirkung absinken. Um ein Absinken des Sinkers 9 zu vermeiden ist eine Feder 13 als eine Zugfeder in dem Abscheidebehälter vorgesehen. Die Feder 13 ist mit ihrem oberen Ende an dem Abscheidebehälter 2 in einem Mittelpunkt des Deckenwandbereichs 3 und mit ihrem unteren Ende mit dem Sinker 9 in einem Mittelpunkt seiner oberen Fläche 10 befestigt. Erst die Feder 13 hält den Sinker 9 in seinem angehobenen Zustand.

Der angehobene Zustand, genauer dessen Lage im Abscheidebehälter wird durch einen Anschlag 15 bestimmt. Dieser Anschlag 15 ist an einem Führungselement in einem oberen Drittel des Abscheidebehälters 2 umlaufend geschlossen angeordnet. Dadurch wird sichergestellt, dass der Sinker 9 sich nicht weiter als bis zum Anschlag 15 nach oben bewegen und somit die Abscheideeinrichtung oder Elemente davon nicht beschädigen kann. In einer alternativen Ausführungsform kann der Sinker in dem angehobenen Zustand (vollständig) oberhalb eines vertikalen Querschnittes 17 eines Innenvolumenabschnittes liegen, der fluidtechnisch (z. B. mindestens 1 cm und/oder höchstens 10 cm) vor dem Sinker liegt.

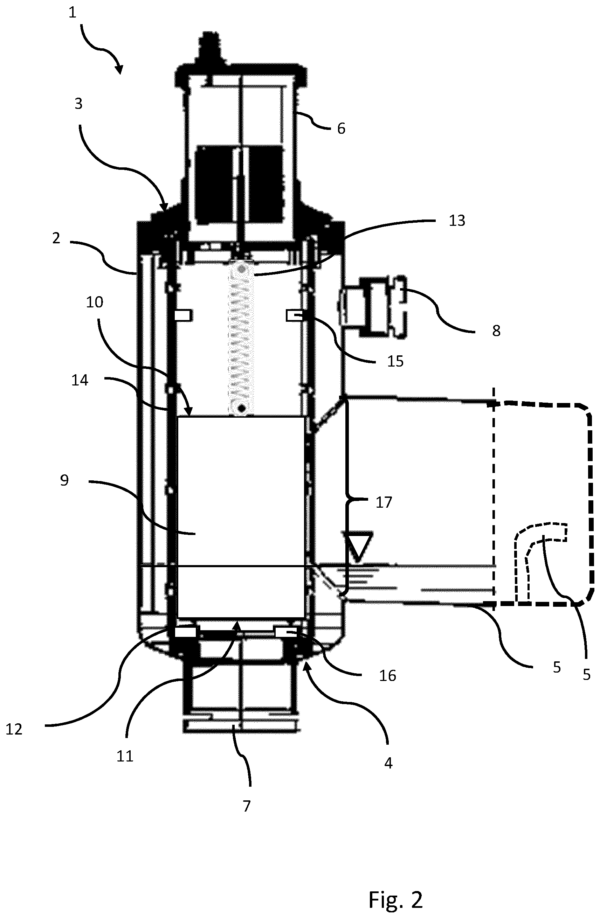

Fig. 2 zeigt eine schematische Darstellung einer erfindungsgemäßen Abscheideeinrichtung 1 in einem zweiten Betriebszustand, in dem der Sinker 9 in einem abgesunkenen Zustand ist.

Sinkt nun ein Pegel des zweiten Fluides beispielsweise aufgrund einer Leckage ab, nimmt auch die (ohnehin geringe) Auftriebskraft durch das zweite Fluid ab. Der Anteil an dem ersten Fluid im Abscheidebehälter nimmt zu. Da die Dichte des ersten Fluides noch kleiner als die des zweiten Fluides ist, senkt sich der Sinker 9 in Richtung seines abgesunkenen Zustands entgegen einer stetig wachsenden Rückstellkraft der Feder 13 ab und schließt damit den zweiten Fluidausgang 7 bzw. die Öffnung dichtend ab.

Der Abscheidebehälter 2 ist nun lediglich mit dem ersten Fluid gefüllt, das über den Entlüfter 6 ausgestoßen werden kann. Eine Druckentlastungseinrichtung 8, die als ein Sicherheitsventil ausgeführt ist, ist seitlich, in einer oberen Hälfte des Abscheidebehälters 2 oberhalb des Fluideingangs 5 und unterhalb des ersten Fluidausgangs (Entlüfter) 6 und oberhalb des zweiten Fluidausgangs 7 angeordnet. Im Falle einer Grobleckage und/oder bei einem defekten Entlüfter 6 dient das Sicherheitsventil 8 dazu, das erste Fluid, insbesondere in flüssiger oder Gas-Form, besonders effektiv abzuleiten.

Um eine zuverlässige Abdichtung zu realisieren, ist es erforderlich, dass der zweite Fluidausgang 7 bzw. die Öffnung vollständig von dem Sinker 9 verschlossen wird. Dazu führt der Sinker 9 eine definierte vertikale, geradlinige Bewegung vom angehobenen zum abgesunkenen Zustand (und zurück) aus. Um Abweichungen des Sinkers 9 von seiner Bewegungsbahn zu vermeiden, ist in dem Abscheidebehälter 2 ein Führungselement 14, vorzugsweise umfassend oder gebildet durch einen Käfig eingefügt. Das Führungselement ist mit dem Deckenwandbereich 3 und dem Bodenwandbereich 4 verbunden und umgibt den Sinker 9 vollständig.

Ferner ist dem zweiten Fluidausgang 7 bzw. der Öffnung eine Dichtung 16 zugeordnet. Die Dichtung 16 ist als ein Dichtring ausgebildet, auf dem der Vorsprung 12 des Sinkers 9 aufsitzt. Dadurch wird eine höhere Flächenpressung realisiert und die Abdichtung verbessert.

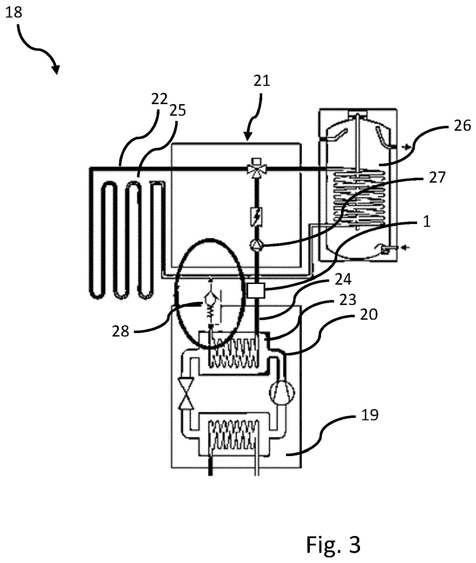

Fig. 3 zeigt eine schematische Darstellung einer erfindungsgemäßen Wärmepumpenanlage 18.

Die Wärmepumpenanlage 18 weist eine Außeneinheit 19 mit einem Kältemittelkreis 20 (Primärkreis) und eine Inneneinheit 21 mit einem Heizkreis (Sekundärkreis) 22 auf. Bei dem Heizkreis 22 kann es sich alternativ oder zusätzlich auch um einen Kühlkreis handeln (der Einfachheit halber wird nachfolgend immer nur von einem "Heizkreis" gesprochen). Zwischen Kältemittelkreis 20 und Heizkreis 22 ist ein Wärmetauscher (Plattenwärmetauscher) 23 angeordnet. Im Wärmetauscher 23 wird Wärme vom Kältemittelkreis 20 auf den Heizkreis 22 übertragen (bzw. umgekehrt, im Falle der Kühlung).

Ausgehend von einem Vorlauf 24 des Heizkreises 22 (an einem Austritt des Wärmetauschers 23) wird ein im Wärmetauscher 23 erwärmtes Fluid des Heizkreises 22 einer Heizung 25 und/oder einem Warmwasserspeicher 26 zugeführt. Dort wird Wärme abgegeben und das abgekühlte Fluid im Heizkreis 22 wird wieder dem Wärmetauscher 23 zugeführt. Zum Fördern des Fluides im Heizkreis 22 kann eine Pumpe 27 vorgesehen sein. Am Vorlauf 24 (des Wärmetauschers 23) ist weiterhin die erfindungsgemäße Abscheideeinrichtung 1 vorgesehen. Diese ist mit weiteren Details in den Fig. 1 und 2 dargestellt.

Im Rücklauf des Heizkreises 22 ist ein Rückschlagventil 28 vorgesehen.

Die Abscheideeinrichtung 1 ist vorzugsweise an einer höchsten Stelle des Heizkreises 22 angeordnet (montiert). Dadurch kann erreicht werden, dass Luft und ggf. Kältemittel sicher aus dem Heizkreis 22 abgeschieden werden. Durch das Rückschlagventil 28 wird verhindert, dass sich eine Druckerhöhung entgegen der Strömungsrichtung ausbreitet.

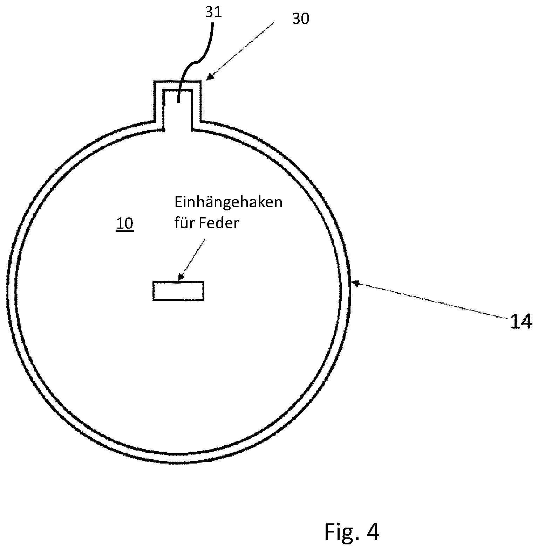

Fig. 4 zeigt eine schematische Schnittdarstellung durch eine erfindungsgemäßem Abscheideeinrichtung. Zu erkennen ist eine Haltevorrichtung 29, vorzugsweise eine Aufhängevorrichtung, weiter vorzugsweise umfassend einen Einhängehaken (alternativ oder zusätzlich eine Einhängeöse). An der Feder kann/können eine korrespondierende Haltevorrichtung, insbesondere in Form von oder umfassend eine Aufhängevorrichtung, vorzugswiese in Form von oder umfassend eine Einhängeöse (alternativ oder zusätzlich eine Einhängeöse) vorgesehen sein. Weiterhin ist (als separater Aspekt, der optional gemeinsam mit den vorangegeben Merkmalen dieses Absatzes vorliegen kann) an einer zum Sinker weisende Fläche eine Führung 30, insbesondere umfassend oder gebildet durch eine Nut erkennbar, vorzugsweise um eine Verdrehsicherung des Sinkers bereitzustellen. Der Sinker kann einen korrespondierenden Vorsprung 31, ggf. in Form oder umfassend eine Rippe und/oder einen Pin aufweisen. Alternativ oder zusätzlich kann (auch) der Sinker eine Führung, insbesondere umfassend oder gebildet durch eine Nut, aufweisen und/oder die zum Sinker weisende Fläche einen Vorsprung, ggf. in Form oder umfassend eine Rippe und/oder einen Pin, aufweisen.
- 1: Abscheideeinrichtung
- 2: Abscheidebehälter
- 3: Deckenwandbereich des Abscheidebehälters
- 4: Bodenwandbereich des Abscheidebehälters
- 5: Fluideingang
- 6: erster Fluidausgang (Entlüfter)
- 7: zweiter Fluidausgang (Öffnung)
- 8: Druckentlastungseinrichtung (Sicherheitsventil)
- 9: Sinker
- 10: obere Fläche des Sinkers
- 11: untere Fläche des Sinkers
- 12: Vorsprung
- 13: Feder
- 14: Führungselement (Käfig)
- 15: Anschlag
- 16: Dichtung (Dichtring)
- 17: Querschnitt
- 18: Wärmepumpenanlage
- 19: Außeneinheit
- 20: Kältemittelkreis
- 21: Inneneinheit
- 22: Heizkreis
- 23: Wärmetauscher
- 24: Vorlauf
- 25: Heizung
- 26: Warmwasserspeicher
- 27: Pumpe
- 28: Rückschlagventil
- 29: Haltevorrichtung

## Patentansprüche

1. Abscheideeinrichtung (1), vorzugsweise Kältemittel- und/oder Luftabscheideeinrichtung, insbesondere für eine Wärmepumpenanlage, zum Separieren eines ersten Fluides, insbesondere eines Gases, aus einer Kombination, insbesondere einem Gemisch, umfassend das erste Fluid und ein zweites Fluid, insbesondere eine Flüssigkeit, vorzugsweise Wasser, und/oder ein Fluid mit höherer Dichte als eine Dichte des ersten Fluides, wobei die Abscheideeinrichtung (1) umfasst:
- zumindest einen Fluidausgang (6, 7),
- zumindest einen Fluideingang (5) und
- eine Absperreinrichtung, wobei die Absperreinrichtung umfasst:
- zumindest einen Sinker (9),
- zumindest ein elastisches Element (13), insbesondere Feder, das derart angeordnet ist, dass es einem Absinken des Sinkers (9) entgegenwirkt und
- zumindest eine Öffnung (7),
wobei der Sinker (9), insbesondere in Abhängigkeit von einem Pegel des zweiten Fluides in der Abscheideeinrichtung (1), in einem angehobenen oder einem abgesunkenen Zustand vorliegen kann, wobei die zumindest eine Öffnung (7) durch den zumindest einen Sinker (9) verschlossen ist, wenn sich der zumindest eine Sinker (9) in dem abgesunkenen Zustand befindet, wobei ein Masse-pro-Verdrängungsvolumen-Verhältnis des Sinkers einen Wert von mindestens 1000 kg/m³ aufweist.

2. Abscheideeinrichtung (1) nach Anspruch 1,
**dadurch gekennzeichnet, dass** zumindest ein erster Fluidausgang (6) für das erste Fluid in einer oberen Hälfte von der Abscheideeinrichtung (1), insbesondere oberhalb von zumindest einem zweiten Fluidausgang (7) für das zweite Fluid und/oder oberhalb von dem zumindest einen Fluideingang (5), insbesondere in einem Deckenwandbereich (3), angeordnet ist und/oder der zumindest eine zweite Fluidausgang (7) in einer unteren Hälfte von der Abscheideeinrichtung (1), insbesondere in einer unteren Hälfte eines Abscheidebehälters, vorzugsweise in einem Bodenwandbereich (4), angeordnet ist und/oder der zumindest eine Fluideingang (5) seitlich und/oder oberhalb des zumindest einen zweiten Fluidausgangs (7) angeordnet ist und/oder tangential in die Abscheideeinrichtung (1) hineinführt.

3. Abscheideeinrichtung (1) nach einem der vorhergehenden Ansprüche,
**dadurch gekennzeichnet, dass**
eine Druckentlastungseinrichtung (8), insbesondere ein Sicherheitsventil, an der Abscheideeinrichtung (1) vorgesehen ist.

4. Abscheideeinrichtung (1) nach einem der vorhergehenden Ansprüche, **dadurch gekennzeichnet, dass**
der zumindest eine erste Fluidausgang (6) als ein Entlüfter, insbesondere Automatikentlüfter ausgebildet ist.

5. Abscheideeinrichtung (1) nach einem der vorhergehenden Ansprüche,
**dadurch gekennzeichnet, dass** dem zumindest einen zweiten Fluidausgang (7) bzw. der zumindest einen absperrbaren Öffnung, eine Dichtung (16), insbesondere ein Dichtring, zugeordnet ist.

6. Abscheideeinrichtung (1) nach einem der vorhergehenden Ansprüche,
**dadurch gekennzeichnet, dass** der zumindest eine Sinker (9) und/oder eine/die Dichtung zumindest einen Vorsprung (12) aufweist, der mit dem zumindest einen zweiten Fluidausgang (7) bzw. der zumindest einen absperrbaren Öffnung und/oder der Dichtung (16), kontaktierbar ist.

7. Abscheideeinrichtung (1) nach einem der vorhergehenden Ansprüche,
**dadurch gekennzeichnet, dass** die Abscheideeinrichtung (1) zumindest einen Anschlag (15) aufweist, der den zumindest einen Sinker (9) in einer vertikalen Bewegung nach oben begrenzt.

8. Abscheideeinrichtung (1) nach einem der vorhergehenden Ansprüche,
**dadurch gekennzeichnet, dass** die Abscheideeinrichtung (1) zumindest ein Führungselement (14) zum, vorzugsweise vertikalen, Führen des zumindest einen Sinkers (9) aufweist.

9. Abscheideeinrichtung (1) nach einem der vorhergehenden Ansprüche,
**dadurch gekennzeichnet, dass** die Abscheideeinrichtung (1) zumindest ein Zentrierelement zum Begrenzen der rotatorischen Bewegung des zumindest einen Sinkers (9) und/oder zum Begrenzen des Verdrehens des zumindest einen elastischen Elements (13) aufweist.

10. Wärmepumpenanlage, insbesondere zum Heizen und/oder Kühlen eines Raumes, vorzugsweise eines Personen-Aufenthaltsbereiches, umfassend eine Abscheideeinrichtung (1), insbesondere Luft- und/oder Kältemittelabscheideeinrichtung, nach einem der vorhergehenden Ansprüche sowie vorzugsweise ein mit der Abscheideeinrichtung (1) fluidtechnisch verbundenes Ventil, vorzugsweise eine Rückschlagarmatur, weiter vorzugsweise eine Rückschlagklappe und/oder ein Rückschlagventil, das stromaufwärts von der Abscheideeinrichtung (1) und/oder der zumindest einen absperrbaren Öffnung (7) angeordnet oder anordenbar ist, insbesondere derart, dass bei verschlossener Öffnung (7) eine Sperrung durch das Ventil erfolgt.

11. Wärmepumpenanlage nach Anspruch 10,
**dadurch gekennzeichnet, dass**
das erste Fluid Luft und/oder ein Edelgas und/oder ein Kältemittel umfasst und/oder
das zweite Fluid Wasser und/oder Sole und/oder einen Alkohol, insbesondere Glykol, und/oder ein Thermofluid umfasst.

12. Wärmepumpenanlage nach Anspruch 10 oder 11,
**dadurch gekennzeichnet, dass**
der zumindest eine Sinker (9) ein Masse-pro-Verdrängungsvolumen-Verhältnis aufweist, das:
größer ist als eine Dichte des ersten Fluides und/oder größer ist als eine Dichte des zweiten Fluides und
einen Wert von mindestens 1000 kg/m³, vorzugsweise mindestens 1050 kg/ m³, ggf. mindestens 1120 kg/m³ und/oder einen Wert von höchstens 10000 kg/m³, ggf. höchstens 5000 kg/m³ oder höchstens 1500 kg/m³ aufweist.

13. Wärmepumpenanlage nach einem der Ansprüche 10 bis 12,
**dadurch gekennzeichnet, dass**
die Abscheideeinrichtung (1) fluidtechnisch, insbesondere unmittelbar, hinter einem Wärmetauscher, insbesondere Plattenwärmetauscher, der Wärmepumpenanlage angeordnet ist.

14. System, vorzugsweise Wärmepumpenanlage, insbesondere nach einem der Ansprüche 10 bis 13, umfassend eine Abscheideeinrichtung (1) nach einem der Ansprüche 1 bis 9 sowie ein Bauteil, durch das das zweite Fluid strömbar ist und bei dem zumindest in einem Leckage-Fall das erste Fluid auch in Bereiche einströmt, die von dem zweiten Fluid durchströmt werden, wobei das Bauteil vorzugsweise Bestandteil eines Wärmetauschers, beispielsweise Verflüssigers oder Verdampfers, ist und/oder wobei ein Ventil, vorzugsweise ein mit der Abscheideeinrichtung (1) fluidtechnisch verbundenes Ventil, vorzugsweise eine Rückschlagarmatur, weiter vorzugsweise eine Rückschlagklappe und/oder ein Rückschlagventil, das stromaufwärts von der Abscheideeinrichtung (1) und/oder der zumindest einen absperrbaren Öffnung (7) angeordnet oder anordenbar ist, insbesondere derart, dass bei verschlossener Öffnung (7) eine Sperrung durch das Ventil erfolgt, stromaufwärts des Bauteils angeordnet ist.

15. Verfahren zum Betreiben einer Abscheideeinrichtung, insbesondere Luft- und/oder Kältemittelabscheideeinrichtung, nach einem der vorhergehenden Ansprüche 1 bis 9 und/oder eines Systems nach einem der Ansprüche 10 bis 13, insbesondere im Fall einer Leckage eines/des Bauteils, vorzugsweise Wärmetauschers, insbesondere Verdampfer und/oder Verflüssigers.

16. Verfahren nach Anspruch 15,
**dadurch gekennzeichnet, dass**
das erste Fluid ein Gas, vorzugsweise Luft und/oder mindestens ein Edelgas, und/oder ein Kältemittel und/oder ein Fluid mit einer geringeren Dichte als ein Masse-zu-Verdrängungsvolumen-Verhältnis des Sinkers (9) umfasst und/oder das zweite Fluid eine Flüssigkeit, vorzugsweise Wasser und/oder Sole und/oder Alkohol, insbesondere Glykol, und/oder Thermofluid, und/oder ein Fluid mit höherer Dichte als eine Dichte des ersten Fluides und/oder ein Fluid mit einer geringeren Dichte als ein Masse-zu-Verdrängungsvolumen-Verhältnis des Sinkers (9) umfasst.

17. Verfahren nach einem der Ansprüche 14 oder 15,
**dadurch gekennzeichnet, dass**
es sich bei dem zweiten Fluid um ein, vorzugsweise zirkulierendes, Arbeitsmedium handelt, aus dem das erste Fluid entfernt wird.

## Claims

1. Separating device (1), preferably refrigerant and/or air separating device, in particular for a heat pump system, for separating a first fluid, in particular gas, from a combination, in particular a mixture, comprising the first fluid and a second fluid, in particular a liquid, preferably water, and/or a fluid having higher density than a density of the first fluid, wherein the separating device (1) comprises:
- at least one fluid outlet (6, 7),
- at least one fluid inlet (5), and
- a shutoff device, wherein the shutoff device comprises:
- at least one sinker (9),
- at least one elastic element (13), in particular a spring, which is arranged such that it counteracts sinking of the sinker (9), and
- at least one opening (7),
- wherein the sinker (9) can be present in a raised or a sunken state, in particular in dependence on a level of the second fluid in the separating device (1), wherein the at least one opening (7) is closed by the at least one sinker (9) when the at least one sinker (9) is in the sunken state, wherein a mass per unit of displacement volume ratio of the sinker has a value of at least 1000 kg/m³.

2. Separating device (1) as claimed in claim 1,
**characterized in that** at least one first fluid outlet (6) for the first fluid is arranged in an upper half of the separating device (1), in particular above at least one second fluid outlet (7) for the second fluid and/or above the at least one fluid inlet (5), in particular in a top wall area (3), and/or the at least one second fluid outlet (7) is arranged in a lower half of the separating device (1), in particular in a lower half of a separating container, preferably in a bottom wall area (4), and/or the at least one fluid inlet (5) is arranged laterally to and/or above the at least one second fluid outlet (7) and/or leads tangentially into the separating device (1).

3. Separating device (1) as claimed in any one of the preceding claims,
**characterized in that**
a pressure relief device (8), in particular a safety valve, is provided on the separating device (1).

4. Separating device (1) as claimed in any one of the preceding claims,
**characterized in that**
the at least one first fluid outlet (6) is designed as a vent, in particular an automatic vent.

5. Separating device (1) as claimed in any one of the preceding claims,
**characterized in that**
a seal (16), in particular a sealing ring, is assigned to the at least one second fluid outlet (7) or the at least one opening that can be shut off.

6. Separating device (1) as claimed in any one of the preceding claims,
**characterized in that**
the at least one sinker (9) and/or a/the seal has at least one projection (12), which can be contacted with the at least one second fluid outlet (7) or the at least one opening that can be shut off and/or the seal (16).

7. Separating device (1) as claimed in any one of the preceding claims,
**characterized in that**
the separating device (1) has at least one stop (15), which delimits the at least one sinker (9) in a vertical movement upward.

8. Separating device (1) as claimed in any one of the preceding claims,
**characterized in that**
the separating device (1) has at least one guide element (14) for the, preferably vertical, guiding of the at least one sinker (9).

9. Separating device (1) as claimed in any one of the preceding claims,
**characterized in that**
the separating device (1) has at least one centering element for limiting the rotational movement of the at least one sinker (9) and/or for limiting the twisting of the at least one elastic element (13).

10. Heat pump system, in particular for heating and/or cooling a room, preferably a room occupied by people, comprising a separating device (1), in particular an air and/or refrigerant separating device, as claimed in any one of the preceding claims and preferably a valve fluidically connected to the separating device (1), preferably a check fitting, more preferably a check flap and/or a check valve, which is arranged or arrangeable upstream of the separating device (1) and/or the at least one opening (7) that can be shut off, in particular such that when the opening (7) is closed, blocking is carried out by the valve.

11. Heat pump system as claimed in claim 10,
**characterized in that**
the first fluid comprises air and/or a noble gas and/or a refrigerant and/or the second fluid comprises water and/or brine and/or an alcohol, in particular glycol, and/or a thermal fluid.

12. Heat pump system as claimed in claim 10 or 11,
**characterized in that**
the at least one sinker (9) has a mass per unit of displacement volume ratio which: is greater than a density of the first fluid and/or is greater than a density of the second fluid and has a value of at least 1000 kg/m³, preferably at least 1050 kg/m³, possibly at least 1120 kg/m³ and/or a value of at most 10000 kg/m³, possibly at most 5000 kg/m³, and/or at most 1500 kg/m³.

13. Heat pump system as claimed in any one of claims 10 to 12,
**characterized in that**
the separating device (1) is arranged fluidically after, in particular directly after, a heat exchanger, in particular a plate heat exchanger, of the heat pump system.

14. System, preferably heat pump system, in particular as claimed in any one of claims 10 to 13, comprising a separating device (1) as claimed in any one of claims 1 to 9 and a component through which the second fluid can flow and in which, at least in case of a leak, the first fluid also flows into areas through which the second fluid flows, wherein the component is preferably part of a heat exchanger, for example, a condenser or evaporator, and/or wherein a valve, preferably a valve fluidically connected to the separating device (1), preferably a check fitting, more preferably a check flap and/or a check valve, which is arranged or arrangeable upstream of the separating device (1) and/or the at least one opening (7) that can be shut off, in particular such that when the opening (7) is closed, blocking is carried out by the valve arranged upstream of the component.

15. Method for operating a separating device, in particular an air and/or refrigerant separating device, as claimed in any one of preceding claims 1 to 9 and/or a system as claimed in any one of claims 10 to 13, in particular in case of a leak of a/the component, preferably heat exchanger, in particular evaporator and/or condenser.

16. Method as claimed in claim 15,
**characterized in that**
the first fluid comprises a gas, preferably air and/or at least one noble gas, and/or a refrigerant and/or a fluid having a lower density than a mass to unit of displacement volume ratio of the sinker (9) and/or the second fluid comprises a liquid, preferably water and/or brine and/or alcohol, in particular glycol, and/or thermal fluid, and/or a fluid having higher density than a density of the first fluid and/or a fluid having a lower density than a mass to unit of displacement volume ratio of the sinker (9).

17. Method as claimed in either one of claims 14 or 15,
**characterized in that**
the second fluid is a, preferably circulating, working medium from which the first fluid is removed.

## Revendications

1. Dispositif de séparation (1), de préférence dispositif de séparation de réfrigérant et/ou d'air, en particulier pour une installation de pompe à chaleur, destiné à séparer un premier fluide, en particulier un gaz, d'une combinaison, en particulier d'un mélange, comprenant le premier fluide et un deuxième fluide, en particulier un liquide, de préférence de l'eau, et/ou un fluide d'une densité plus élevée que la densité du premier fluide, lequel dispositif de séparation (1) comprend :
- au moins une sortie de fluide (6, 7),
- au moins une entrée de fluide (5) et
- un dispositif de fermeture, lequel dispositif de fermeture comprend :
- au moins un flotteur (9),
- au moins un élément élastique (13), en particulier un ressort, disposé de manière à s'opposer à un abaissement du flotteur (9) et
- au moins une ouverture (7),
dans lequel le flotteur (9) peut se présenter dans un état relevé ou descendu, en particulier en fonction d'un niveau du deuxième fluide dans le dispositif de séparation (1), l'au moins une ouverture (7) étant fermée par l'au moins un flotteur (9) quand l'au moins un flotteur (9) se trouve dans l'état descendu, un rapport entre masse et volume de refoulement du flotteur ayant une valeur d'au moins 1000 kg/m³.

2. Dispositif de séparation (1) selon la revendication 1, **caractérisé en ce qu'**au moins une première sortie de fluide (6) pour le premier fluide est disposée dans une moitié supérieure du dispositif de séparation (1), en particulier au-dessus d'au moins une deuxième sortie de fluide (7) pour le deuxième fluide et/ou au-dessus de l'au moins une entrée de fluide (5), en particulier dans une zone de la paroi supérieure (3), et/ou l'au moins une deuxième sortie de fluide (7) est disposée dans une moitié inférieure du dispositif de séparation (1), en particulier dans une moitié inférieure d'un réservoir de séparation, de préférence dans une zone de paroi inférieure (4), et/ou l'au moins une entrée de fluide (5) est disposée latéralement et/ou au-dessus de l'au moins une deuxième sortie de fluide (7) et/ou donne de façon tangente dans le dispositif de séparation (1).

3. Dispositif de séparation (1) selon l'une des revendications précédentes, **caractérisé en ce qu'**un dispositif de détente de la pression (8), en particulier une soupape de sécurité, est prévu sur le dispositif de séparation (1).

4. Dispositif de séparation (1) selon l'une des revendications précédentes, **caractérisé en ce que** l'au moins une première sortie de fluide (6) est conçue comme un purgeur d'air, en particulier un purgeur d'air automatique.

5. Dispositif de séparation (1) selon l'une des revendications précédentes, **caractérisé en ce qu'**une garniture d'étanchéité (16), en particulier un joint d'étanchéité, est associée à l'au moins une deuxième sortie de fluide (7) ou à l'au moins une ouverture pouvant être fermée.

6. Dispositif de séparation (1) selon l'une des revendications précédentes, **caractérisé en ce que** l'au moins un flotteur (9) et/ou une/la garniture d'étanchéité présentent au moins une saillie (12) qui peut être mise en contact avec l'au moins une deuxième sortie de fluide (7) ou l'au moins une ouverture pouvant être fermée et/ou la garniture d'étanchéité (16).

7. Dispositif de séparation (1) selon l'une des revendications précédentes, **caractérisé en ce que** le dispositif de séparation (1) comporte au moins une butée (15) qui limite un mouvement vertical de l'au moins un flotteur (9) vers le haut.

8. Dispositif de séparation (1) selon l'une des revendications précédentes, **caractérisé en ce que** le dispositif de séparation (1) comporte au moins un élément de guidage (14) pour le guidage, de préférence vertical, de l'au moins un flotteur (9).

9. Dispositif de séparation (1) selon l'une des revendications précédentes, **caractérisé en ce que** le dispositif de séparation (1) comporte au moins un élément de centrage destiné à limiter le mouvement de rotation de l'au moins un flotteur (9) et/ou à limiter la torsion de l'au moins un élément élastique (13).

10. Installation de pompe à chaleur, en particulier pour chauffer et/ou rafraîchir une pièce, de préférence une zone où se tiennent des personnes, comprenant un dispositif de séparation (1), en particulier un dispositif de séparation d'air et/ou de réfrigérant, selon l'une des revendications précédentes et de préférence une soupape en liaison pour la circulation de fluide avec le dispositif de séparation (1), de préférence un organe de robinetterie antiretour, de préférence encore un clapet antiretour et/ou une soupape antiretour, qui est ou peut être disposée en amont du dispositif de séparation (1) et/ou de l'au moins une ouverture pouvant être fermée (7), en particulier de telle manière qu'un arrêt par la soupape soit réalisé quand l'ouverture (7) est fermée.

11. Installation de pompe à chaleur selon la revendication 10, **caractérisée en ce que** le premier fluide comprend de l'air et/ou un gaz rare et/ou un réfrigérant et/ou
le deuxième fluide comprend de l'eau et/ou de la saumure et/ou un alcool, en particulier du glycol, et/ou un thermofluide.

12. Installation de pompe à chaleur selon la revendication 10 ou 11, **caractérisée en ce que** l'au moins un flotteur (9) présente un rapport entre masse et volume déplacé qui :
est plus grand que la densité du premier fluide et/ou plus grand que la densité du deuxième fluide et présente une valeur d'au moins 1000 kg/m³, de préférence d'au moins 1050 kg/m³, selon les cas d'au moins 1120 kg/m³ et/ou une valeur de 10 000 kg/m³ au maximum, selon les cas 5000 kg/m³ au maximum ou 1500 kg/m³ au maximum.

13. Installation de pompe à chaleur selon l'une des revendications 10 à 12, **caractérisée en ce que** le dispositif de séparation (1) est disposé en vue de la circulation de fluide, en particulier directement, après un échangeur de chaleur, en particulier un échangeur de chaleur à plaques, de l'installation de pompe à chaleur.

14. Système, en particulier installation de pompe à chaleur, en particulier selon l'une des revendications 10 à 13, comprenant un dispositif de séparation (1) selon l'une des revendications 1 à 9 ainsi qu'un composant à travers lequel le deuxième fluide peut circuler et dans lequel, au moins en cas de fuite, le premier fluide circule aussi dans des zones parcourues par le deuxième fluide, le composant faisant de préférence partie d'un échangeur de chaleur, par exemple d'un condenseur ou d'un évaporateur, et/ou dans lequel une soupape, de préférence une soupape communiquant avec le dispositif de séparation (1) en vue de la circulation de fluide, de préférence un organe de robinetterie antiretour, de préférence encore un clapet antiretour et/ou une soupape antiretour, qui est ou peut être disposée en amont du dispositif de séparation (1) et/ou de l'au moins une ouverture pouvant être fermée (7), en particulier de telle manière qu'un arrêt soit réalisé par la soupape quand l'ouverture (7) est fermée, est disposée en amont du composant.

15. Procédé pour la conduite d'un dispositif de séparation, en particulier d'un dispositif de séparation d'air et/ou de réfrigérant selon l'une des revendications 1 à 9, et/ou d'un système selon l'une des revendications 10 à 13, en particulier en cas de fuite d'un/du composant, de préférence de l'échangeur de chaleur, en particulier de l'évaporateur et/ou du condenseur.

16. Procédé selon la revendication 15, **caractérisé en ce que** le premier fluide comprend un gaz, de préférence de l'air et/ou au moins un gaz rare, et/ou un réfrigérant et/ou un fluide ayant une densité inférieure à un rapport entre masse et volume déplacé du flotteur (9) et/ou le deuxième fluide comprend un liquide, de préférence de l'eau et/ou de la saumure et/ou un alcool, en particulier du glycol, et/ou un thermofluide et/ou un fluide ayant une densité plus élevée que la densité du premier fluide et/ou un fluide ayant une densité inférieure à un rapport entre masse et volume déplacé du flotteur (9).

17. Procédé selon l'une des revendications 14 ou 15, **caractérisé en ce que** le deuxième fluide est un fluide de travail, de préférence circulant, duquel le premier fluide est enlevé.
